# EUROPÄISCHE PATENTSCHRIFT

(11) **EP 0 466 736 B1**
(45) Veröffentlichungstag und Bekanntmachung des Hinweises auf die Patenterteilung: **07.09.1994**
(21) Anmeldenummer: 90905380.3
(22) Anmeldetag: 04.04.1990
(51) Int. Cl.: H04M 1/72

(54) **SCHNURLOS-TELEFONSYSTEM MIT EINER NEBENSTELLEN-KOMMUNIKATIONSANLAGE**
WIRELESS TELEPHONE SYSTEM WITH AN EXTENSION COMMUNICATIONS UNIT
SYSTEME DE TELEPHONE SANS FIL AVEC INSTALLATION DE COMMUNICATION A POSTES SECONDAIRES

(30) Priorität: 04.04.1989 AT 788/89
(43) Veröffentlichungstag der Anmeldung: 22.01.1992
(73) Patentinhaber: Siemens Aktiengesellschaft Österreich, 1210 Wien (AT); SIEMENS AKTIENGESELLSCHAFT, 80333 München (DE)
(72) Erfinder: LANGMANTEL, Ernst, A-1220 Wien (AT)
(74) Vertreter: Fuchs, Franz-Josef, Dr.-Ing.
(86) Internationale Anmeldenummer: AT9000025
(87) Internationale Veröffentlichungsnummer: WO9012469

(56) Entgegenhaltungen:
- EP-A- 0 188 322
- EP-A- 0 260 763
- EP-A- 0 291 068
- GB-A- 2 166 622
- GB-A- 2 193 861
- 37th IEEE Vehicular Technology Conference, 1.-3. Juni 1987, Tampa, Florida, IEEE (US); T. Hattori et al.: "A new mobile communication system using autonomous radio link control with decentralized base stations", Seiten 579-586
- Patent Abstracts of Japan, Band 8, Nr. 29 (E-226)(1466), 7. Februar 1984 & JP, A, 58191540

## Beschreibung

Die Erfindung betrifft ein Schnurlos-Telefonsystem mit Mobilteilen und Feststationen, wobei die Feststationen über Teilnehmerleitungen mit einer Nebenstellen-Kommunikationsanlage verbunden sind, einer Feststation mehrere Mobilteile und den Mobilteilen Teilnehmerrufnummern der Nebenstellen-Kommunikationsanlage zugeordnet sind, wobei die Teilnehmerrufnummern von den Feststationen in die entsprechenden individuellen Kennungen der Mobilteile umwandelbar und die Feststationen an unterschiedlichen Orten aufgestellt sind, wobei die Funkbereiche der Feststationen unterschiedliche Gebiete umfassen.

Ein derartiges Telefonsystem wird im Bericht der 37th IEEE Vehicular Technology Conference, 1.-3. Juni 1987, Tampa, Florida (US) von T. Hattori et al. auf Seite 579 - 586 unter "A new mobile communication system using autonomous radio link control with decentralized base stations" beschrieben. Das System benötigt eine spezielle Funkkontrolleinheit (RCU), die zwischen die Kommunikationsanlage und die Feststationen (Basisstationen) geschaltet ist. Gemäß Abschnitt 5.1 enthält die Funkkontrolleinheit ein Koppelfeld, um die Amtsleitung mit der Feststation zu verbinden, in deren Funkbereich sich der Schnurlosteilnehmer aufhält.

Die Entgegenhaltung GB-A 2 193 861 beschreibt ein Schnurlos-Telefonsystem mit zahlreichen Basisstationen, wobei die Mobilteile jeweils einer Heimat-Basisstation zur Verrechnung zugeordnet sind. Hier werden von einer Zugriffskontrolleinheit die Aufenthaltsorte von Schnurlos-Teilnehmern gesammelt. Die Suche nach einem gerufenen Teilnehmer erfolgt dann vom letzten bekannten Aufenthaltsort aus und führt nicht zwangsweise und auf kurzem Weg zur richtigen Basisstation. Durch die hierarchische Struktur von Lokal- und Bezirkskontrolleinheiten kann die Suche nach dem Teilnehmer die Kommunikationsanlage stark belasten.

In der GB-A 2 166 622 ist ein Telefonsystem mit mehrere Feststationen beschrieben, die zu einer Einheit zusammengefaßt sind, wobei mehrere Mobilteile einer Feststation zugeordnet sind. Diese zusammengefaßte Station ist über eine Teilnehmerleitung je Mobilteil mit der Nebenstellen-Kommunikationsanlage verbunden. Jeder Mobilteil wählt einen freien Frequenzkanal aus einer Gruppe aus und kann über diesen eine Verbindung zu einer Feststation aufbauen. Jeder Feststation ist jedoch ein bestimmter Frequenzkanal zugeordnet. Ein ankommendes Gespräch für einen Schnurlos Teilnehmer wird von der Nebenstellen-Kommunikationsanlage über die entsprechende Teilnehmerleitung des Mobilteiles zu einer freien Feststation geschaltet. Diese setzt die Teilnehmernummer in die individuelle Kennung des Mobilteiles um und signalisiert das ankommende Gespräch. Gleichzeitig wird für weitere Gespräche eine nächste freie Feststation markiert. Mit einem Austausch der individuellen Kennung wird sichergestellt, daß Verbindungen nur zwischen Feststationen und Mobilteilen desselben Telefonsystems aufgebaut werden.

Postgenehmigte Schnurlos-Telefone im 900-MHz-Bereich können über eine Anschlußeinheit mit einer Nebenstellen-Kommunikationsanlage verbunden werden und fungieren als Nebenstelle wie ein herkömmlicher Schnur-Telefonapparat. Jeder Mobilteil bildet mit seiner Feststation eine Einheit, die durch individuellen Kennungsaustausch identifizierbar ist. Die Verbindung zwischen Mobilteil und Feststation wird über einen freien Funkkanal aufgebaut, der aus 40 möglichen Kanälen ausgewählt wird. Eine Fehlverbindung zwischen Mobilteil und Feststation wird dadurch verhindert, daß durch die individuelle Kennung jeder Mobilteil nur mit der ihm zugeordneten Feststation verbunden werden kann.

Ein weiteres Schnurlos-Telefonsystem ist in der EP-A 180 178 beschrieben, bei dem einer Feststation mehrere Mobilteile zugeordnet sind. Die Mobilteile unterscheiden sich durch ihre gerätespezifische Kennung, einem Haupt-Mobilteil sind mehrere Neben-Mobilteile untergeordnet. Es ist nur vom Haupt-Mobilteil möglich, abgehende Gespräche zu führen und ankommende entgegenzunehmen. Von den Neben-Mobilteilen können nur ankommende Gespräche entgegengenommen werden. Dadurch wird verhindert, daß von möglicherweise unbeaufsichtigten Mobilteilen abgehende Gespräche geführt werden und der Teilnehmer mit Gebühren belastet wird.

Der Aktionsradius des Teilnehmers mit einem Mobilteil ist in jedem Fall auf etwa 100 - 200 Meter begrenzt, da er anderenfalls die Funkreichweite der Feststation verläßt. Einen grundsätzlich weiteren Aktionsradius haben Mobiltelefone, wie sie im B- oder C-Netz der Post verwendet werden. Diese Mobiltelefone bestehen aus einem verhältnismäßig großen und schweren Sende- und Empfangsteil, der vom Teilnehmer transportiert werden muß und bedeutend unhandlicher ist, als der Mobilteil eines Schnurlos-Telefons. Bei diesen zellularen Mobilfunknetzen, wie beispielsweise gemäß EP-A 260 763, stellt sich das Problem der Teilnehmersuche nicht in der durch die Erfindung zu lösenden Form. Die Lokalisierung eines Mobilteilnehmers erfolgt ständig über einen zentralen Kommunikationskanal und wird von einer Vermittlungsstelle zentral verwaltet. Ortsfeste Teilnehmergeräte, wie Schnurtelefone, sind in Mobilfunknetzen nicht vorhanden.

Der Erfindung liegt die Aufgabe zugrunde, den Aktionsradius eines Teilnehmers mit Mobilteil im Bereich einer Nebenstellen-Kommunikationsanlage ohne Kontrolleinheit zu vergrößern.

Dies wird gemäß Patentanspruch 1 bei einem Schnurlos-Telefonsystem mit in der Nebenstellen-Kommunikationsanlage gespeicherter momentaner Zuordnung der Mobilteile zu den Funkbereichen und Leitung eines ankommenden Gespräches von der Nebenstellen-Kommunikationsanlage an jene Feststation, in deren Bereich sich der Mobilteil des gerufenen Teilnehmers befindet, dadurch gelöst, daß Mittel zum periodischen Austausch der individuellen Kennung der Mobilteile mit den Feststationen und Mittel zur Nutzung eines gebräuchlichen Leistungsmerkmals der Nebenstellen-Kommunikationsanlage zur Aktualisierung der Zuordnung vorgesehen sind.

Der Einsatzbereich von Nebenstellen-Kommunikationsanlagen erstreckt sich oft über ein Gebiet, das weitaus größer ist, als der Funkbereich der Feststation eines Schnurlos-Telefons. Darüberhinaus sind mit einer derartigen Kommunikationsanlage oftmals auch auseinanderliegende Standorte verbunden. Mit dem erfindungsgemäßen Schnurlos-Telefonsystem wird ein Mikrozellularsystem mit Feststationen aufgebaut, wobei die Feststationen als Sender und Empfänger fungieren. Die einzelnen Mobilteile unterscheiden sich durch die individuelle Kennung, und von der Kommunikationsanlage kann ihnen somit eindeutig eine,Teilnehmerrufnummer zugeordnet werden. Somit sind auch hier Fehlverbindungen zwischen Mobilteil und Feststation verhindert. Die Erreichbarkeit der einzelnen Teilnehmer wird günstigerweise über eine Variation der Zahl der möglichen Funkkanäle je Feststation verändert. In diesem erfindungsgemäßen Mikrozellularsystem ist ein Schnurlos-Teilnehmer bei ankommendem Gespräch gezielt erreichbar, da diejenige Feststation gespeichert ist, in deren Funkbereich sich der Teilnehmer aufhält. Diese Aktualisierung der Teilnehmer-Feststations-Zuordnung wird als aktive Teilnehmerverwaltung bezeichnet. Sie wird ohne Zusatzeinrichtungen mit einem bereits vorhandenen Leistungsmerkmal der Nebenstellen-Kommunikationsanlage durchgeführt. Im Betriebsablauf der Kommunikationsanlage müssen keine Veränderungen vorgenommen werden, wenn anstelle von normalen Schnur-Telefonen mit diesen Teilnehmerrufnummern ein Mikrozellularsystem erreichbar ist. Darüberhinaus wird festgestellt, ob sich ein Mobilteil außerhalb des Funkbereiches der Feststation befindet und der Teilnehmer daher nicht erreichbar ist. Bei einem ankommenden Gespräch für diesen Teilnehmer kann dann eine entsprechende Meldung durchgegeben und/oder ein Sprachspeicher aktiviert werden.

Die Aufgabe wird nach Patentanspruch 2 bei einem Schnurlos-Telefonsystem, von dem jede Feststation eine periodische Kennung sendet und Mittel zum Austausch der individuellen Kennung eines Mobilteiles mit der Feststation bei einem Wechsel des Funkbereiches vorhanden sind und die momentane Zuordnung der Mobilteile zu den Funkbereichen der Feststationen in der Nebenstellen-Kommunikationsanlage gespeichert ist und ein ankommendes Gespräch von der Nebenstellen-Kommunikationsanlage an jene Feststation geleitet wird, in deren Bereich sich der Mobilteil des gerufenen Teilnehmers befindet, auch dadurch gelöst, daß Mittel zur Nutzung eines gebräuchlichen Leistungsmerkmals der Nebenstellen-Kommunikationsanlage zur Aktualisierung der Zuordnung vorgesehen sind.

Für diese aktive Teilnehmerverwaltung der Schnurlos-Teilnehmer wird weniger Funkkanalkapazität unabhängig von konkreten Gesprächswünschen als bei dem Telefonsystem nach Patentanspruch 1 benötigt. Das Ein- bzw. Ausbuchen eines Schnurlos-Teilnehmers kann automatisch oder durch Betätigung einer Funktionstaste erfolgen. Die Vorteile des Mikrozellularsystems bleiben erhalten.

Zur Anwendung ist es vorteilhaft, daß das Leistungsmerkmal Anrufumleitung ("call forwarding") vorhanden ist, daß eine Anfangskonfiguration mit der Zuordnung jedes Mobilteiles zu einer bestimmten Feststation gespeichert ist, daß Mittel zum Aufbau einer Internverbindung beim Wechsel eines Mobilteiles vom Funkbereich einer Feststation in den Funkbereich einer anderen Feststation von der anderen Feststation aus mit Übertragung der Teilnehmerrufnummer des übergewechselten Mobilteiles zur anfangs gespeicherten Feststation vorhanden sind und durch Mittel der anfangs gespeicherten Feststation die Anrufumleitung der Teilnehmerrufnummer des Mobilteiles auf die neue Feststation gespeichert ist. Diese Internverbindung kann über eine beliebige Teilnehmerleitung oder eine dafür als Signalisierungsleitung gesonderte reservierte Teilnehmerleitung zwischen den Feststationen und der Kommunikationsanlage aufgebaut werden. Es ist dafür eine dem Verkehrsaufkommen entsprechende Funkkanalkapazität zu reservieren. Die Anfangskonfiguration legt gleichsam eine "Heimat-Feststation" für jeden Mobilteil fest.

Der Aufbau der Internverbindung kann entfallen, wenn das Leistungsmerkmal Anrufumleitung-Nachziehen ("follow me") vorhanden ist und durch Mittel derjenigen Feststation die Anrufumleitung der dem Mobilteil zugeordneten Teilnehmerrufnummer gespeichert ist, in deren Funkbereich der Schnurlos-Teilnehmer übergewechselt ist. Das Nachziehen der Anrufumleitung kann prinzipiell über eine beliebige Teilnehmerleitung der neuen Feststation erfolgen, wird aber, falls vorhanden, über die Signalisierungsleitung erfolgen.

Die Erreichbarkeit der Schurlos-Teilnehmer wird dadurch verbessert, daß Feststationen über mehr als eine Teilnehmerleitung mit der Nebenstellen-Kommunikationsanlage verbunden und diese Teilnehmerleitungen in der Nebenstellen-Kommunikationsanlage zu einem Sammelanschluß zusammengefaßt sind. Die Aktualisierung einer Anrufumleitung durch die jeweilige Feststation wird dann auf diesen Sammelanschluß durchgeführt. Damit kann bei einer ankommenden Belegung eine beliebige freie Teilnehmerleitung der betreffenden Feststation verwendet werden.

Dies gilt auch dafür, daß Feststationen über mehr als eine Teilnehmerleitung mit der Nebenstellen-Kommunikationsanlage verbunden sind und in der Nebenstellen-Kommunikationsanlage eine Rufweiterschaltung vorhanden ist, die bei ankommendem Gespräch von einer besetzten Teilnehmerleitung auf eine andere Teilnehmerleitung derselben Feststation weiterschaltet.

Unterschiede in der Aktivierung der Leistungsmerkmale in den Nebenstellen-Kommunikationsanlagen können dadurch ausgeglichen werden, daß die Feststation ein Schnittstellenmodul zur Anpassung an die Teilnehmerprozeduren des Leistungsmerkmales unterschiedlicher Nebenstellen-Kommunikationsanlagen enthält. Es ist vorteilhaft, daß bei digitaler Funkübertragung zwischen Feststation und Mobilteil ein Adaptermodul für den Mobilteil vorhanden ist, an das Datenendgeräte anschließbar sind. Dieses Adaptermodul ist unabhängig vom Anschluß an die Nebenstellen-Kommunikationsanlage und ersetzt aufwendige Modems. Es kann in den Mobilteil eingebaut, oder zur besseren Austauschbarkeit extern an eine herausgeführte Schnittstelle angesteckt sein.

Die Erfindung wird anhand eines Ausführungsbeispieles mit Zeichnungen näher erläutert. Es zeigen:
- Fig. 1: ein schematisches Blockschaltbild des Ausführungsbeispieles,
- Fig. 2: ein schematisches Blockschaltbild einer Feststation und
- Fig. 3: ein schematisches Blockschaltbild eines Mobilteiles.

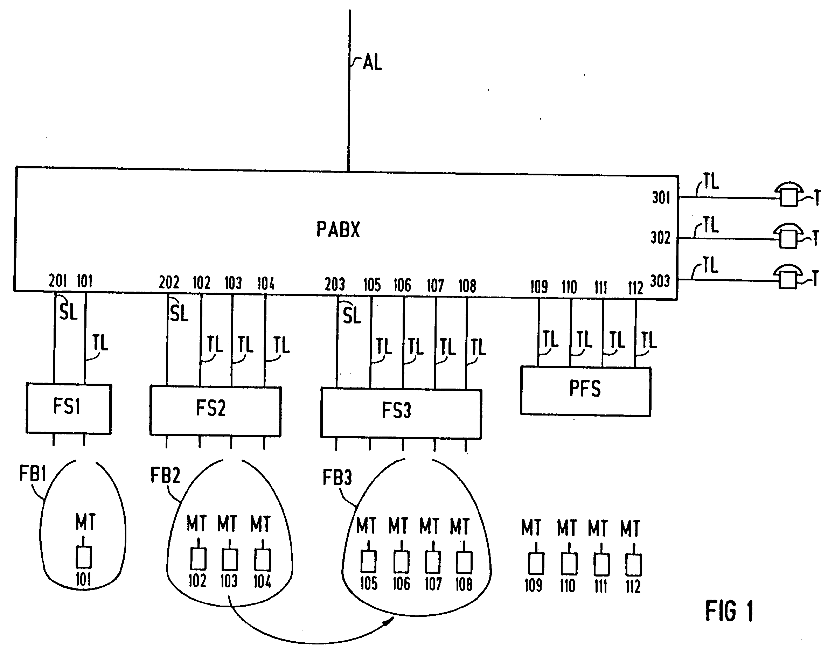

Die Fig. 1 zeigt eine Nebenstellen-Kommunikationsanlage PABX mit analogen und digitalen Schnur-Telefonen T und Schnurlos-Telefonen, die sich über ein ausgedehnteres Gebiet erstreckt. Als Nebenstellen-Kommunikationsanlage PABX kann beispielsweise ein System Hicom 300 der Firma Siemens verwendet werden. Die Leistungsmerkmale dieses Systems sind im Handbuch A 30951-A1000-V220-1-18 der Siemens AG beschrieben. Die Verbindung zum öffentlichen Telefonnetz wird mit Amtsleitungen AL hergestellt. Feststationen FSn bilden ein Mikrozellularsystem der Schnurlos-Telefone und sind wie die Schnur-Telefone T über Teilnehmerleitungen TL mit der Nebenstellen-Kommunikationsanlage PABX verbunden. Mobilteile MT dieses Systems unterscheiden sich durch eine individuelle Kennung, die mit den Feststationen FSn über Funk ausgetauscht wird. Mikrozellularsysteme anderer Kommunikationsanlagen verfügen über eine andere Kennung. Je nach erforderlicher Erreichbarkeit der Schnurlos-Teilnehmer können ein oder mehrere Duplex-Funkkanäle je Feststation FSn zur Verfügung stehen. Im allgemeinen wird die Zahl der Kanäle mit der Zahl der Teilnehmerleitungen TL übereinstimmen, mit denen die jeweilige Feststation FSn mit der Nebenstellen-Kommunikationsanlage PABX verbunden ist. Die Schnurlos-Telefone können 900-MHz-Systemen entsprechen, in kleineren Kommunikationsanlagen können aber auch bereits 27- oder 40-MHz-Systeme ausreichen. Beim Ortswechsel eines Schnurlos-Teilnehmers kann sein Mobilteil MT in den Funkbereich FBn einer anderen Feststation FSn überwechseln.

Abgehende Gespräche vom Mobilteil MT zur Feststation FSn werden analog zu existierenden Schnurlos-Telefonen geführt, wobei zwischen jeder Feststation FSn und jedem Mobilteil MT eine Verbindung aufgebaut werden kann. Von den Mobilteilen MT wird in periodischen Abständen die individuelle Kennung an diejenige Feststation FSn gesendet, in deren Funkbereich FBn sie sich befinden. Das Funkfeld wird jedoch weniger belastet, wenn die Feststationen FSn eine periodische Kennung senden und die Mobilteile MT nur dann, wenn sie den Funkbereich FBn einer Feststation FSn verlassen. Mit aktiver Teilnehmerverwaltung wird durch die Vermittlungssteuerung der Nebenstellen-Kommunikationsanlage PABX der aktuelle Aufenthaltsort der Mobilteile MT in den Funkbereichen FBn der einzelnen Feststationen FSn erfaßt. Dadurch kann ein ankommendes Gespräch direkt an diejenige Feststation FSn geleitet werden, in deren Funkbereich FBn sich der gerufene Mobilteil MT derzeit befindet. Die Teilnehmerverwaltung wird unter Nutzung der Leistungsmerkmale Anrufumleitung oder Anrufumleitung-Nachziehen ("follow me") der Nebenstellen-Kommunikationsanlage PABX ausgeführt. Dazu ist jede Feststation FSn durch eine Signalisierungsleitung SL mit der Nebenstellen-Kommunikationsanlage PABX verbunden, und es ist eine dem Verkehrsaufkommen entsprechende Funkkanalkapazität für die Aktualisierung der Mobilteil-Feststations-Zuordnung reserviert. Über die Signalisierungsleitung SL kann die Teilnehmerverwaltung auch bei besetzten Teilnehmerleitungen TL durchgeführt werden.

Jedem Mobilteil MT muß eine bestimmte Teilnehmerrufnummer als Nebenstelle entsprechen. Sind gleichviele Mobilteile MT wie Teilnehmerleitungen TL zu den Feststationen FSn vorhanden, so werden den Mobilteilen MT genau die Teilnehmerrufnummern dieser Teilnehmerleitungen TL zugeordnet. Die Zuordnung ist in die Fig. 1 eingetragen. Zur besseren Nutzung der Kapazität des Mikrozellularsystems ist es vorteilhaft, mehr Mobilteile MT zu betreiben, als Teilnehmerleitungen TL zu den Feststationen FSn vorhanden sind (Teilnehmerrufnummern 109 - 112). Bei Verwendung des Leistungsmerkmales Anrufumleitung muß für diese überzähligen Mobilteile MT eine Pseudo-Feststation PFS an die Kommunikationsanlage angeschlossen werden, die keine Funkkanäle besitzt. Sie hat die Aufgabe, die Anrufumleitung für die ihr zugeordneten Teilnehmer zu aktualisieren. Die Zahl der Teilnehmerleitungen TL an der Pseudo-Feststation PFS entspricht der Zahl der zusätzlich möglichen Mobilteile MT. Bei Verwendung des Leistungsmerkmales Anrufumleitung-Nachziehen ("follow me") kann die Teilnehmerrufnummer eines beliebigen Schnur-Teilnehmers verwendet werden. Für diese Teilnehmerrufnummer wird dann von der ersten für den betreffenden Mobilteil MT vorgesehenen Feststation FSn eine Anrufumleitung auf sich eingerichtet.

Bei aktiver Teilnehmerverwaltung mit dem Leistungsmerkmal Anrufumleitung wird durch die Ausgangszuordnung der Mobilteile MT zu den Feststationen FSn und der Pseudo-Feststation PFS für jeden Mobilteil MT eine "Heimat-Feststation" bestimmt, die während des gesamten Betriebes die Aktualisierung der Anrufumleitung für die ihr zugeordneten Teilnehmer durchführt. Wechselt beispielsweise der Mobilteil MT mit der Teilnehmerrufnummer 103 vom Funkbereich FB2 der zweiten Feststation FS2 in den Funkbereich FB3 der dritten Feststation FS3, so ermittelt die dritte Feststation FS3 aufgrund der Identifikationsnummer bzw. aufgrund der zugeordneten Teilnehmerrufnummer 103 die Heimat-Feststation dieses Mobilteiles MT. Danach baut die dritte Feststation FS3 über ihre Signalisierungsleitung SL eine Internverbindung zur Heimat-Feststation auf. Die zweite Feststation FS2 erkennt aufgrund der B-Teilnehmerrufnummer 203, die aus der Gruppe jener Rufnummern stammt, die für die Signalisierungsleitungen SL festgelegt wurden, daß es sich um den Anruf einer anderen Feststation FSn zur Aktualisierung der Mobilteil-Feststations-Zuordnung eines ihr zugeordneten Teilnehmers handelt. Falls einer Feststation FSn nur ein Teilnehmer zugeordnet ist, liegt fest, für welchen Teilnehmer die Anrufumleitung auf eine der Teilnehmerrufnummern der neuen Feststation FSn umzuleiten ist. Falls der neuen Feststation FSn mehrere Teilnehmer zugeordnet sind, kann unter Umständen die Nummer des umzuleitenden Teilnehmers in die Anrufsignalisierung integriert werden. Sie kann auch nach Melden der Heimat-Feststation im durchgeschalteten Zustand mit Hilfe des Multifrequenzverfahrens übertragen werden. Über diese stets aktualisierte Anrufumleitung gelangt ein ankommendes Gespräch an eine Teilnehmerleitung TL der richtigen Feststation FSn.

Zur aktiven Teilnehmerverwaltung kann auch das Leistungsmerk mal Anrufumleitung-Nachziehen ("follow me") der Nebenstellen-Kommunikationsanlage PABX genutzt werden. Dabei können durch aktivierte Anrufumleitungen ursprünglich mehrere Teilnehmerrufnummern einer Teilnehmerleitung TL zugeordnet sein. Wenn ein Mobilteil MT in den Funkbereich einer anderen Feststation FSn gelangt, erfolgt durch die andere Feststation FSn das Einrichten bzw. Nachziehen der notwendigen Anrufumleitung für diesen Teilnehmer über die Signalisierungsleitung SL in der Nebenstellen-Kommunikationsanlage PABX. Über diese stets aktualisierte Anrufumleitung gelangt ein ankommendes Gespräch an die Teilnehmerleitung TL der richtigen Feststation FSn.

Da ein oder mehrere Mobilteile MT auf eine Teilnehmerleitung TL umgeleitet sein können, muß sichergestellt werden, daß auch nur der gewünschte Mobilteil MT gerufen wird. Bei umgeleiteten Anrufen für einen übergewechselten Mobilteil MT wird von der Feststation FSn die an digitalen Teilnehmerschnittstellen der Nebenstellen-Kommunikationsanlage PABX üblicherweise verfügbare Teilnehmerrufnummer des gerufenen Teilnehmers zur Unterscheidung verwendet. Bei analogen Anschlüssen kann diese Information gegebenenfalls unter Modifikation der Nebenstellen-Kommunikationsanlage PABX im Multifrequenzverfahren weitergeleitet werden. Befindet sich ein Mobilteil MT im Funkbereich FBn seiner Heimat-Feststation, so ergibt sich für diese aus der über digitale Teilnehmerschnittstellen üblicherweise übertragenen Information, daß es sich um keinen umgeleiteten Anruf handelt. Der Mobilteil MT des gerufenen Schnurlos-Teilnehmers besitzt daher die Teilnehmerrufnummer der belegten Teilnehmerleitung TL. Dies ergibt sich bei analogen Anschlüssen daraus, daß nach dem Melden keine Teilnehmerrufnummer übertragen wird. Die Teilnehmerrufnummer wird von der Feststation FSn in die entsprechende Funkidentifikationsnummer umgesetzt und damit der Mobilteil MT des gewünschten Teilnehmers gezielt gerufen.

Wenn die Feststation FSn über mehrere Teilnehmerleitungen TL mit der Nebenstellen-Kommunikationsanlage PABX verbunden ist, erfolgt das Anrufnachziehen oder die Anrufumleitung im allgemeinen auf eine bestimmte Teilnehmerleitung TL. Um den gerufenen, umgeleiteten Teilnehmer auch dann erreichen zu können, wenn gerade diese spezielle Teilnehmerleitung TL besetzt ist, ist das Leistungsmerkmal Sammelanschluß der Nebenstellen-Kommunikationsanlage PABX nutzbar. Alle Teilnehmerleitungen TL einer Feststation FSn werden dann zu einem Sammelanschluß zusammengefaßt, und die Anrufumleitung wird auf diesen Sammelanschluß gelegt. Darüberhinaus ist es auch mit dem Leistungsmerkmal Rufweiterschaltung möglich, im Besetztfall eine andere Teilnehmerleitung TL der Feststation FSn zu nutzen. Bei Kettung dieses Leistungsmerkmales können alle Teilnehmerleitungen TL einer Feststation FSn auf Verfügbarkeit geprüft werden. Falls nur eine Rufweiterschaltung durchgeführt werden kann, ergibt sich eine entsprechend geringere Verbesserung der Erreichbarkeit.

Falls die Rufnummer des Zielteilnehmers in der Signalisierung zur Feststation FSn nicht enthalten ist, beispielsweise bei Leistungsmerkmalen wie Anrufwiederholung nach dem ersten Gespräch eines sich nicht meldenden Teilnehmers" oder "Rückruf im Besetztfall" ist folgende Variante für jeden Schnurlos-Teilnehmer vorzusehen. Für die Teilnehmerrufnummer wird eine eine Umleitung auf einen eigenen analogen Teilnehmeranschluß eingeleitet. Diese Stelle ist außerhalb des Systems mit einem eigenen Amtssatz bzw. Quersatz mit eingetragener Teilnehmerrufnummer verbunden. Als Ziel bei kommendem Ruf ist beim Amts-/Quersatz eine bestimmte Nebenstelle, meist nur programmgesteuert, eingerichtet. Dieser fiktive Teilnehmeranschluß kann im allgemeinen sogar derselbe Anschluß sein, auf den der Teilnehmer umgeleitet ist, weil eine für diesen Anschluß eingetragene Anrufumleitung von der Nebenstellen-Kommunikationsanlage PABX im allgemeinen ignoriert wird, wenn er das Ziel eines bereits umgeleiteten Anrufes ist. Durch die, für diese fiktive Nebenstelle stets aktualisierte Anrufumleitung wird immer die richtige Feststation FSn erreicht. Als Anzeige für den gerufenen Teilnehmer in der Feststation FSn wird von der Nebenstellen-Kommunikationsanlage PABX die Bezeichnung des Amts-/Quersatzes signalisiert. In diesem Falle ist das die Rufnummer und der Name des eigentlich gewünschten Teilnehmers. So kann dieser dann von der Feststation FSn gezielt gerufen werden. Der Amts-/Quersatz muß ein Erd-Signal aussenden können, damit der Schnurlos-Teilnehmer die Leistungsmerkmale der Nebenstellen-Kommunikationsanlage PABX nutzen kann.

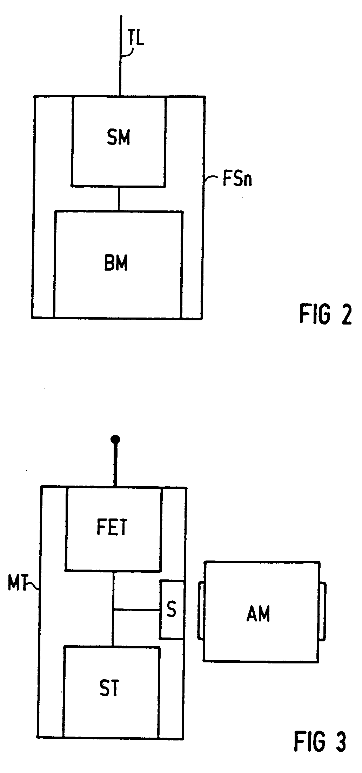

Wie Fig. 2 zeigt, ist jede Feststation FSn aus einem Betriebsmodul BM und einem Schnittstellenmodul SM aufgebaut. Unterschiedliche Aktivierungsprozeduren der Leistungsmerkmale verschiedener Nebenstellen-Kommunikationsanlagen werden durch das Schnittstellenmodul SM an den einheitlichen Aufbau der Feststationen FSn angepaßt. Das Schnittstellenmodul SM ist über eine interne Normschnittstelle mit dem Betriebsmodul BM der Feststation FS verbunden.

In Fig. 3 ist der Aufbau eines Mobilteiles MT gezeigt, wie es bei digitaler Funkübertragung verwenden wird. Ein Adaptermodul AM wird an eine interne Schnittstelle S angesteckt. Es setzt übertragene Daten für genormte Schnittstellen von Datenendgeräten um. Das Adaptermodul AM ist zwischen den digitalen Funkempfangsteil FET und den analogen Sprachteil ST des Mobilteiles MT geschaltet. Genormte Schnittstellen vom Typ V 24, X 21, X 25 oder Sₒ sind durch den Austausch des Adaptermoduls AM verfügbar. Datenendgeräte können dadurch mobil im gesamten Bereich der Nebenstellen-Kommunikationsanlage betrieben werden.

## Patentansprüche

1. Schnurlos-Telefonsystem mit Mobilteilen (MT) und Feststationen (FSn), wobei die Feststationen (FSn) über Teilnehmerleitungen (TL) mit einer Nebenstellen-Kommunikationsanlage (PABX) verbunden sind, einer Feststation (FSn) mehrere Mobilteile (MT) und den Mobilteilen (MT) Teilnehmerrufnummern der Nebenstellen-Kommunikationsanlage (PABX) zugeordnet sind, wobei die Teilnehmerrufnummern von den Feststationen (FSn) in die entsprechenden individuellen Kennungen der Mobilteile (MT) umwandelbar und die Feststationen (FSn) an unterschiedlichen Orten aufgestellt sind, die Funkbereiche (FBn) der Feststationen (FSn) unterschiedliche Gebiete umfassen und die momentane Zuordnung der Mobilteile (MT) zu den Funkbereichen (FBn) in der Nebenstellen-Kommunikationsanlage (PABX) gespeichert ist und wobei ein ankommendes Gespräch von der Nebenstellen-Kommunikationsanlage (PABX) an jene Feststation (FSn) geleitet wird, in deren Bereich sich der Mobilteil (MT) des gerufenen Teilnehmers befindet, **dadurch gekennzeichnet,** daß Mittel zum periodischen Austausch der individuellen Kennung der Mobilteile (MT) mit den Feststationen (FSn) und Mittel zur Nutzung eines gebräuchlichen Leistungsmerkmals der Nebenstellen-Kommunikationsanlage (PABX) zur Aktualisierung der Zuordnung vorgesehen sind.

2. Schnurlos-Telefonsystem mit Mobilteilen (MT) und Feststationen (FSn), wobei die Feststationen (FSn) über Teilnehmerleitungen (TL) mit einer Nebenstellen-Kommunikationsanlage (PABX) verbunden sind, einer Feststation (FSn) mehrere Mobilteile (MT) und den Mobilteilen (MT) Teilnehmerrufnummern der Nebenstellen-Kommunikationsanlage (PABX) zugeordnet sind, wobei die Teilnehmerrufnummern von den Feststationen (FSn) in die entsprechenden individuellen Kennungen der Mobilteile (MT) umwandelbar und die Feststationen (FSn) an unterschiedlichen Orten aufgestellt sind, die Funkbereiche (FBn) der Feststationen (FSn) unterschiedliche Gebiete umfassen, wobei jede Feststation (FSn) eine periodische Kennung sendet, Mittel zum Austausch der individuellen Kennung eines Mobilteiles (MT) mit der Feststation (FSn) bei einem Wechsel des Funkbereiches (FBn) vorhanden sind und die momentane Zuordnung der Mobilteile (MT) zu den Funkbereichen (FBn) der Feststationen (FSn) in der Nebenstellen-Kommunikationsanlage (PABX) gespeichert ist und wobei ein ankommendes Gespräch von der Nebenstellen-Kommunikationsanlage (PABX) an jene Feststation (FSn) geleitet wird, in deren Bereich sich der Mobilteil (MT) des gerufenen Teilnehmers befindet, **dadurch gekennzeichnet,** daß Mittel zur Nutzung eines gebräuchlichen Leistungsmerkmals der Nebenstellen-Kommunikationsanlage (PABX) zur Aktualisierung der Zuordnung vorgesehen sind.

3. Schnurlos-Telefonsystem nach Anspruch 1 oder 2, **dadurch gekennzeichnet,** daß das Leistungsmerkmal Anrufumleitung vorhanden ist, daß eine Anfangskonfiguration mit der Zuordnung jedes Mobilteiles (MT) zu einer bestimmten Feststation (FSn) gespeichert ist, daß Mittel zum Aufbau einer Internverbindung beim Wechsel eines Mobilteiles (MT) vom Funkbereich (FBn) einer Feststation (FSn) in den Funkbereich (FBn) einer anderen Feststation (FSn) von der anderen Feststation (FSn) aus mit Übertragung der Teilnehmerrufnummer des übergewechselten Mobilteiles (MT) zur anfangs gespeicherten Feststation (FSn) vorhanden sind und durch Mittel der anfangs gespeicherten Feststation (FSn) die Anrufumleitung der Teilnehmerrufnummer des Mobilteiles (MT) auf die neue Feststation (FSn) gespeichert ist.

4. Schnurlos-Telefonsystem nach Anspruch 1 oder 2, **dadurch gekennzeichnet,** daß das Leistungsmerkmal Anrufumleitung-Nachziehen vorhanden ist und durch Mittel derjenigen Feststation (FSn) die Anrufumleitung der dem Mobilteil (MT) zugeordneten Teilnehmerrufnummer gespeichert ist, in deren Funkbereich (FBn) der Schnurlos-Teilnehmer übergewechselt ist.

5. Schnurlos-Telefonsystem nach einem der vorherigen Ansprüche, **dadurch gekennzeichnet,** daß Feststationen (FSn) über mehr als einer Teilnehmerleitung (TL) mit der Nebenstellen-Kommunikationsanlage (PABX) verbunden und diese Teilnehmerleitungen (TL) in der Nebenstellen-Kommunikationsanlage (PABX) zu einem Sammelanschluß zusammengefaßt sind.

6. Schnurlos-Telefonsystem nach einem der Ansprüche 1 bis 4, **dadurch gekennzeichnet,** daß Feststationen (FSn) über mehr als eine Teilnehmerleitung (TL) mit der Nebenstellen-Kommunikationsanlage (PABX) verbunden sind und in der Nebenstellen-Kommunikationsanlage (PABX) eine Rufweiterschaltung vorhanden ist, die bei ankommendem Gespräch von einer besetzten Teilnehmerleitung (TL) auf eine andere Teilnehmerleitung (TL) derselben Feststation (FSn) weiterschaltet.

7. Schnurlos-Telefonsystem nach einem der vorherigen Ansprüche, **dadurch gekennzeichnet,** daß die Feststation (FSn) ein Schnittstellenmodul (SM) zur Anpassung an die Teilnehmerprozeduren des Leistungsmerkmales unterschiedlicher Nebenstellen-Kommunikationsanlagen (PABX) enthält.

8. Schnurlos-Telefonsystem nach einem der vorherigen Ansprüche, **dadurch gekennzeichnet,** daß bei digitaler Funkübertragung zwischen Feststation (FSn) und Mobilteil (MT) ein Adaptermodul (AM) für den Mobilteil (MT) vorhanden ist, an das Datenendgeräte anschließbar sind.

## Claims

1. Cordless telephone system having mobile sets (MT) and base stations (FSn), the base stations (FSn) being connected via subscriber lines (TL) to a private automatic branch exchange (PABX), a plurality of mobile sets (MT) being allocated to one base station (FSn) and subscriber numbers of the private automatic branch exchange (PABX) being allocated to the mobile sets (MT), the subscriber numbers being convertible by the base stations (FSn) into the corresponding individual identifications of the mobile sets (MT) and the base stations (FSn) being set up at different locations, the radio cells (FBn) of the base stations (FSn) covering different areas and the current allocation of the mobile sets (MT) to the radio cells (FBn) being stored in the private automatic branch exchange (PABX), and an incoming call being transferred from the private automatic branch exchange (PABX) to the particular base station (FSn) in whose cell the mobile set (MT) of the called subscriber is located, characterized in that means for periodically exchanging the individual identification of the mobile sets (MT) with the base stations (FSn) and means for utilizing a conventional facility of the private automatic branch exchange (PABX) for updating the allocation are provided.

2. Cordless telephone system having mobile sets (MT) and base stations (FSn), the base stations (FSn) being connected via subscriber lines (TL) to a private automatic branch exchange (PABX), a plurality of mobile sets (MT) being allocated to one base station (FSn) and subscriber numbers of the private automatic branch exchange (PABX) being allocated to the mobile sets (MT), the subscriber numbers being convertible by the base stations (FSn) into the corresponding individual identifications of the mobile sets (MT) and the base stations (FSn) being set up at different locations, the radio cells (FBn) of the base stations (FSn) covering different areas, each base station (FSn) transmitting a periodic identification, means being present for exchanging the individual identification of a mobile set (MT) with the base station (FSn) when the radio cell (FBn) changes, and the current allocation of the mobile sets (MT) to the radio cells (FBn) of the base stations (FSn) being stored in the private automatic branch exchange (PABX), and an incoming call being transferred from the private automatic branch exchange (PABX) to the particular base station (FSn) in whose cell the mobile set (MT) of the called subscriber is located, characterized in that means for utilizing a conventional facility of the private automatic branch exchange (PABX) for updating the allocation are provided.

3. Cordless telephone system according to Claim 1 or 2, characterized in that the call forwarding facility is present, in that an initial configuration with the allocation of each mobile set (MT) to a particular base station (FSn) is stored, in that means are present for establishing an internal connection when a mobile set (MT) moves from the radio cell (FBn) of one base station (FSn) into the radio cell (FBn) of another base station (FSn) from the other base station (FSn) with transmission of the subscriber number of the moved mobile set (MT) to the initially stored base station (FSn), and the call forwarding of the subscriber number of the mobile set (MT) to the new base station (FSn) is stored by means of the initially stored base station (FSn).

4. Cordless telephone system according to Claim 1 or 2, characterized in that the follow-me facility is present and the call forwarding of the subscriber number allocated to the mobile set (MT) is stored by means of the particular base station (FSn) into whose radio cell (FBn) the cordless subscriber has moved.

5. Cordless telephone system according to one of the preceding claims, characterized in that base stations (FSn) are connected via more than one subscriber line (TL) to the private automatic branch exchange (PABX), and said subscriber lines (TL) are combined in the private automatic branch exchange (PABX) to form a line group.

6. Cordless telephone system according to one of Claims 1 to 4, characterized in that base stations (FSn) are connected via more than one subscriber line (TL) to the private automatic branch exchange (PABX), and there is present in the private automatic branch exchange (PABX) a call redirection facility which redirects an incoming call from a busy subscriber line (TL) to another subscriber line (TL) of the same base station (FSn).

7. Cordless telephone system according to one of the preceding claims, characterized in that the base station (FSn) contains an interface module (SM) for adaptation to the subscriber procedures of the facility of different private automatic branch exchanges (PABX).

8. Cordless telephone system according to one of the preceding claims, characterized in that in the case of digital radio transmission between base station (FSn) and mobile set (MT), an adapter module (AM) for the mobile set (MT) is present, to which data terminals can be connected.

## Revendications

1. Système de téléphone sans fil comportant des éléments mobiles (MT) et des postes fixes (FFn), dans lequel les postes fixes (FFn) sont reliés par l'intermédiaire de lignes d'abonnés (TL) à une installation de communication à postes supplémentaires (PABX), plusieurs éléments mobiles (MT) sont associés à un poste fixe (FNn) et des numéros d'abonnés de l'installation de communication à postes supplémentaires (PABX) sont associés aux éléments mobiles (MT), les numéros d'appel des postes fixes (FSn) peuvent être convertis en les caractérisations individuelles correspondantes des éléments mobiles (MT), et les postes fixes (FSn) sont installés en différents endroits, les zones de communication hertzienne (FBn) des postes fixes (FSn) couvrent des régions différentes et l'association instantanée des éléments mobiles (MT) à des zones de transmission hertzienne (FBn) est mémorisée dans l'installation de communication à postes supplémentaires (PABX), et une conversation arrivante est envoyée, par l'installation de communication à postes supplémentaires (PABX), à chaque poste fixe (FSn) dans la zone duquel est situé l'élément mobile (MT) de l'abonné appelé, caractérisé par le fait que des moyens sont prévus pour l'échange périodique de la caractérisation individuelle des éléments mobiles (MT) avec les postes fixes (FSn) et que des moyens sont prévus pour l'utilisation d'une caractéristique potentielle usuelle de l'installation de communication à postes supplémentaires (PABX) pour l'actualisation de l'association.

2. Système de téléphone sans fil comportant des éléments mobiles (MT) et des postes fixes (FFn), dans lequel les postes fixes (FFn) sont reliés par l'intermédiaire de lignes d'abonnés (TL) à une installation de communication à postes supplémentaires (PABX), plusieurs éléments mobiles (MT) sont associés à un poste fixe (FNn) et des numéros d'abonnés de l'installation de communication à postes supplémentaires (PABX) sont associés aux éléments mobiles (MT), les numéros d'appel des postes fixes (FSn) peuvent être convertis en les caractérisations individuelles correspondantes des éléments mobiles (MT), et les postes fixes (FSn) sont installés en différents endroits, les zones de communication hertzienne (FBn) des postes fixes (FSn) couvrent des régions différentes, et dans lequel chaque poste mobile (FSn) identifie une caractérisation périodique, des moyens sont prévus pour échanger l'indicatif individuel d'un élément mobile (MT) avec le poste fixe (FSn) dans le cas d'un changement de la zone de transmission hertzienne (FBn), et l'association instantanée des éléments mobiles (MT) aux zones de transmission hertzienne (FBn) des postes fixes (FSn) est mémorisée dans l'installation de communication à postes supplémentaires (PABX), et dans lequel une conversation arrivante est envoyée par l'installation de communication à postes supplémentaires (PABX) à chaque poste fixe (FSn) dans la zone duquel est situé l'élément mobile du poste d'abonné appelé, caractérisé par le fait que des moyens sont prévus pour utiliser une caractéristique potentielle usuelle de l'installation de communication à postes supplémentaires (PABX) pour l'actualisation de l'association.

3. Système téléphonique sans fil suivant la revendication 1 ou 2, caractérisé par le fait que la caractéristique potentielle de renvoi d'appel est présente, qu'une configuration initiale est mémorisée avec l'association de chaque élément mobile (MT) à un poste fixe déterminé (FSn), qu'il est prévu des moyens pour établir une liaison interne lors du passage d'un élément mobile (MT) de la zone de transmission hertzienne (FBn) d'un poste fixe (FSn) à la zone de transmission hertzienne (FBn) d'un autre poste fixe (FSn), à partir de l'autre poste fixe (FSn), avec transmission du numéro d'abonné de l'élément mobile (MT) au poste fixe (FSn) ayant changé de zone, mémorisé au départ, et que le renvoi d'appel du numéro d'abonné de l'élément mobile (MT) est mémorisé, à l'aide de moyens du poste fixe (FSn) mémorisé initialement, en direction du nouveau poste fixe (FSn).

4. Système téléphonique sans fil suivant la revendication 1 ou 2, caractérisé par le fait que la caractéristique potentielle à asservissement du renvoi d'appel est présente et que le renvoi d'appel du numéro d'abonné associé à l'élément mobile (MT) est mémorisé par des moyens du poste fixe (FSn), dans la zone de transmission hertzienne (FBn) duquel est passé l'abonné sans fil.

5. Système téléphonique sans fil suivant l'une des revendications précédentes, caractérisé par le fait que des postes fixes (FSn) sont reliés à l'installation de communication de postes supplémentaires (PABX) par l'intermédiaire de plus d'une ligne d'abonné (TL), et que ces lignes d'abonnés (TL) sont réunies à une borne omnibus dans l'installation de communication à postes supplémentaires (PABX).

6. Système téléphonique sans fil suivant l'une des revendications 1 à 4, caractérisé par le fait que des postes fixes (FSn) sont reliés, par l'intermédiaire de plus d'une ligne d'abonné (TL), à l'installation de communication à postes supplémentaires (PABX), et que dans l'installation de communication à postes supplémentaires (PABX) est présent un circuit de retransmission d'appel qui, lors de l'arrivée d'une conversation, réalise la commutation d'une ligne d'abonné occupée (TL) à une autre ligne d'abonné (TL) du même poste fixe (FSn).

7. Système téléphonique sans fil suivant l'une des revendications précédentes, caractérisé par le fait que le poste fixe (FSn) contient un module d'interface (SM) pour réaliser l'adaptation aux procédures d'abonnés de la caractéristique potentielle de différentes installations de communication à postes supplémentaires (PABX).

8. Système téléphonique sans fil suivant l'une des revendications précédentes, caractérisé par le fait que dans le cas de la transmission hertzienne numérique entre un poste fixe (FSn) et un élément mobile (MT), il est prévu, pour l'élément mobile (MT), un module d'adaptation (AM) auquel des terminaux de transmission de données peuvent être raccordés.
